# EUROPÄISCHE PATENTANMELDUNG

(11) **EP 2 639 670 A1**
(43) Veröffentlichungstag der Anmeldung: **18.09.2013**
(21) Anmeldenummer: 12159532.6
(22) Anmeldetag: 14.03.2012
(51) Int. Cl.: G06F 1/16, H04M 1/02

(54) **Elektronisches Gerät**

(71) Anmelder: Siemens Aktiengesellschaft, 80333 München (DE)
(72) Erfinder: Andlauer, Timo, 76185 Karlsruhe (DE); Arndt, Jonas, 76137 Karlsruhe (DE); Witt, Sebastian, 75305 Neuenbürg (DE)

(57) **Zusammenfassung**

Es wird vorgeschlagen ein elektronisches Gerät (1) mit einem Schacht (2) zur Aufnahme eines wiederaufladbaren Energiespeichers (3), welcher zur Versorgung des Gerätes (1) mit elektrischer Energie vorgesehen ist, und mit einem elektrischen Anschluss (4) zum Anschließen des Energiespeichers (3). Mittels geeigneter Maßnahmen wird während des Betriebs ein Wechsel des Energiespeichers auch ohne Stromnetz ermöglicht.

## Beschreibung

Die Erfindung betrifft ein elektronisches Gerät mit einem Schacht zur Aufnahme eines wiederaufladbaren Energiespeichers, welcher zur Versorgung des Gerätes mit elektrischer Energie vorgesehen ist, und mit einem elektrischen Anschluss zum Anschließen des Energiespeichers.

Derartige elektronische Geräte, z. B. elektronische Geräte in Form von Notebooks oder Netbooks, sind allgemein bekannt. Für den Fall, dass ein fast entladener Energiespeicher bzw. Akku durch einen geladenen Akku auszutauschen ist, ist es erforderlich, das Gerät zunächst an ein Stromnetz anzuschließen bevor ein Akkutausch ohne Datenverlust bewerkstelligt werden kann. Falls ein Anschluss an ein Stromnetz aufgrund fehlender örtlicher Gegebenheiten nicht möglich ist, kann der Akku erst dann ausgewechselt werden, wenn das Gerät zunächst ausgeschaltet wird.

Der Erfindung liegt daher die Aufgabe zugrunde, ein elektronisches Gerät der eingangs genannten Art zu schaffen, welches während des Betriebs einen Wechsel des Energiespeichers auch ohne Stromnetz ermöglicht.

Diese Aufgabe wird durch die im kennzeichnenden Teil des Anspruchs 1 angegebenen Maßnahmen gelöst.

In einer Ausgestaltung der Erfindung sind die Anschlüsse zum Einschwenken in den und zum Ausschwenken aus dem Schacht schwenkbar gelagert, wodurch der Akkuwechsel in einfacher Art und Weise bewerkstelligt werden kann. Zunächst wird der "freie" Anschluss, d. h. der Anschluss, an welchem gerade kein Akku angeschlossen ist, aus dem Schacht ausgeschwenkt und an diesen ein geladener Akku angeschlossen. Anschließend wird der entladene Akku, der an dem anderen schwenkbar gelagerten Anschluss angeschlossen ist, aus dem Schacht ausgeschwenkt und von diesem anderen Anschluss entfernt. Schließlich wird der geladene Akku mittels des schwenkbar gelagerten Anschlusses in den Schacht eingeschwenkt, wodurch der Akkuwechsel im laufenden Betrieb des Gerätes abgeschlossen ist.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 2: ein tragbares Gerät in stark vereinfachter Form und
- Figur 3: einen schwenkbaren Anschluss.

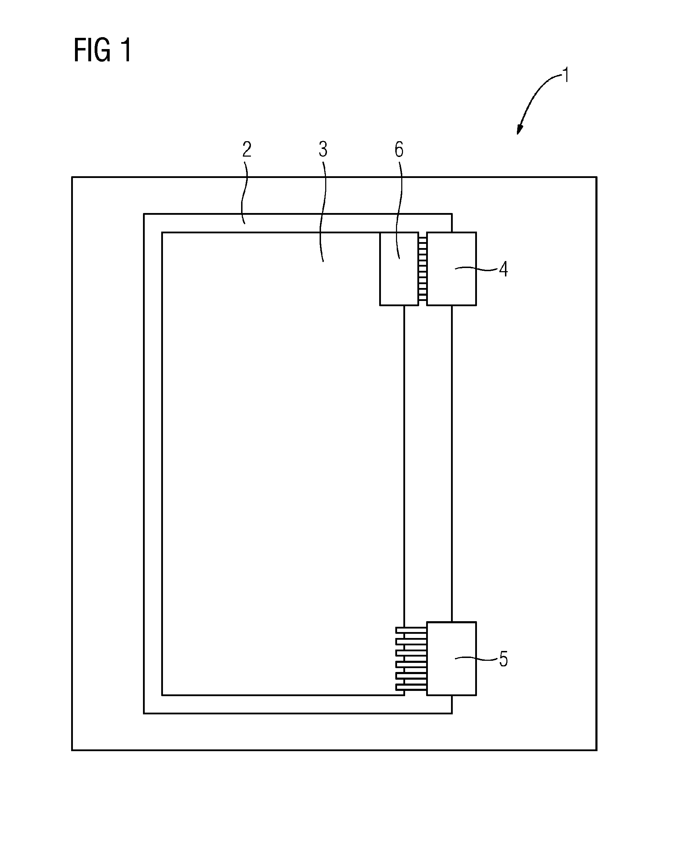

Die in den Figuren 1 bis 3 gleichen Teile sind mit gleichen Bezugszeichen versehen.

In Figur 1 ist mit 1 ein Notebook bezeichnet, das einen Schacht 2 zur Aufnahme eines Akkus 3 aufweist. An diesem Schacht 2 sind zwei elektrische Anschlüsse 4, 5 angeordnet, von denen im vorliegenden Beispiel der Anschluss 4 zum elektrischen Anschließen des Akkus 3 und der Anschluss 5 zum elektrischen Anschließen eines weiteren Akkus vorgesehen ist. Die Anschlüsse 4, 5 sind schwenkbar am Schacht 2 gelagert, wobei der Anschluss 4 mit einem zu diesem Anschluss 4 korrespondierenden Anschluss 6 des Akkus 3 in Wirkverbindung steht und der Akku 3 über diese Anschlüsse 4, 6 das Notebook 1 mit elektrischer Energie versorgt. Der Anschluss 5 ist während des Betriebs des Notebooks 1 in den Schacht 2 eingeschwenkt, wodurch vermieden wird, dass die Kontakte dieses Anschlusses 5 aus dem Schacht 2 ragen.

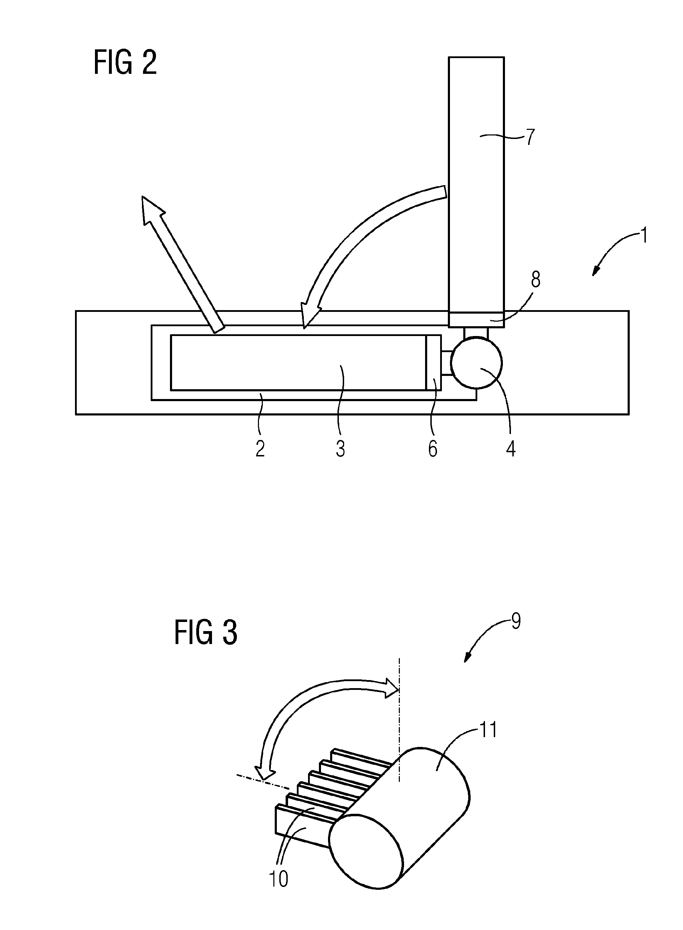

Im Folgenden wird angenommen, dass der Akku 3 (Figur 2) sich fast vollständig entladen hat und durch einen geladenen Akku 7 zu ersetzen ist, um einen Verlust von Daten zu vermeiden.

Der Wechsel bzw. Austausch erfolgt in der Art und Weise, dass ein Anwender zunächst den Anschluss 5 (Figur 1) aus dem Schacht 2 ausschwenkt und mit einem Anschluss 8 des Akkus 7 verbindet. Dadurch ist sichergestellt, dass der Akku 7 über die Anschlüsse 5, 8 das Notebook 1 mit elektrischer Energie versorgt. Anschließend schwenkt der Anwender den entladenen Akku 3 mittels des schwenkbar gelagerten Anschlusses 4 aus dem Schacht 2 aus und trennt den Anschluss 4 vom Anschluss 6 des Akkus 3. Schließlich schwenkt der Anwender den geladenen Akku 7 mittels des schwenkbar gelagerten Anschlusses 5 in den Schacht 2 ein, wodurch der Akkuwechsel im laufenden Betrieb des Notebooks 1 abgeschlossen ist. Um wiederum zu vermeiden, dass Kontakte des Anschlusses 4 aus dem Schacht 2 hinausragen, wird der Anschluss 4 durch den Anwender in den Schacht 2 eingeschwenkt.

In Figur 3 ist ein Anschluss 9 dargestellt, der mit mehreren Kontakten 10 versehen ist, welche mit zu diesen Kontakten korrespondierenden Kontakten eines Anschlusses eines Akkus kontaktierbar sind. Ferner weist der Anschluss 9 ein Gelenk 11 mit intern im Gelenk 11 oder außerhalb des Gelenks 11 extern verlegten hier nicht dargestellten Leitern auf, über die die Kontakte 10 mit elektrischen Stromsenken des Notebooks 1 verbunden sind.

Die Erfindung lässt sich damit wie folgt zusammenfassen: Ein elektronisches Gerät 1 mit einem Schacht 2 zur Aufnahme eines wiederaufladbaren Energiespeichers 3, welcher zur Versorgung des Gerätes 1 mit elektrischer Energie vorgesehen ist, und mit einem elektrischen Anschluss 4 zum Anschließen des Energiespeichers 3, zeichnet sich dadurch aus, dass das Gerät 1 mit einem weiteren elektrischen Anschluss 5 zum Anschließen eines weiteren wiederaufladbaren Energiespeichers 7 versehen ist und dass die Anschlüsse 4, 5 zum Einbauen in den Schacht 2 und zum Ausbauen aus dem Schacht 2 beweglich gelagert sind. Mittels eines derartigen Gerätes wird während des Betriebs ein Wechsel des Energiespeichers auch ohne Stromnetz ermöglicht.

## Patentansprüche

1. Elektronisches Gerät mit einem Schacht (2) zur Aufnahme eines wiederaufladbaren Energiespeichers (3), welcher zur Versorgung des Gerätes (1) mit elektrischer Energie vorgesehen ist, und mit einem elektrischen Anschluss (4) zum Anschließen des Energiespeichers (3), **dadurch gekennzeichnet, dass** das Gerät (1) mit einem weiteren elektrischen Anschluss (5) zum Anschließen eines weiteren wiederaufladbaren Energiespeichers (7) versehen ist und dass die Anschlüsse (4, 5) zum Einbauen in den Schacht (2) und zum Ausbauen aus dem Schacht (2) beweglich gelagert sind.

2. Elektronisches Gerät nach Anspruch 1, **dadurch gekennzeichnet, dass** die Anschlüsse (4, 5) zum Einschwenken in den und zum Ausschwenken aus dem Schacht (2) schwenkbar gelagert sind.
